# EUROPEAN PATENT SPECIFICATION

(11) **EP 0 507 568 B1**
(45) Date of publication and mention of the grant of the patent: **30.12.1998**
(21) Application number: 92302868.2
(22) Date of filing: 01.04.1992
(51) Int. Cl.: H02J 7/10

(54) **Automatic charge cut-off circuit and application**
Schaltkreis zum automatischen Abschalten einer Last und seiner Verwendung
Circuit d'interruption automatique d'une charge et son application

(30) Priority: 05.04.1991 GB 9107105
(43) Date of publication of application: 07.10.1992
(73) Proprietor: Yang, Tai-Her, Si-Hu Town Dzan-Hwa (TW)
(72) Inventor: Yang, Tai-Her, Si-Hu Town Dzan-Hwa (TW)
(74) Representative: Wright, Howard Hugh Burnby

(56) References cited:
- DE-A- 2 354 178
- DE-A- 3 340 944
- DE-A- 3 815 385
- GB-A- 2 018 061
- US-A- 3 911 351

## Description

All conventional charge circuits are involved in multiple parts, a complicated structure so that the production cannot be accomplished at a reasonable cost and reliability.

UK Patent Publication No. 2018061 discloses a battery charging circuit in which a fast charge mode and trickle charge mode are applied to a battery for recharging the battery. The fast charge section of the circuit and the trickle charge section of the circuit are arranged in parallel. The fast charge circuit includes a silicon control rectifier 28 which is connected in series with a thermal switch. A gate input to the SCR is connected to ground via a capacitor and a resistor in parallel. The SCR is maintained in a conducting mode whilst the capacitor is charged since the charge on the capacitor holds the voltage of the gate at a high voltage level. The capacitor is initially charged via a switch S1 and diode D4 and is subsequently kept charged through the gate of the SCR. When the thermal switch is opened as a result of the temperature from the battery the current through the SCR is stopped and the capacitor C1 is discharged through resistor R4. The fast charge part of the circuit can only be restored by momentarily closing the switch S1. In the second embodiment the capacitor C1 also maintains the SCR in a conducting mode whilst the capacitor C1 is in a fully charged state. Once the capacitor C1 has been discharged through resistor R4 so that its voltage drops below a certain amount, the SCR becomes permanently non conducting.

DE-3340944 discloses a battery charging circuit in which a thermostat switch is connected in series with a silicon controlled rectifier. The gate of the silicon controlled rectifier is connected to a circuit which is controlled by a transistor, a capacitor and a number of resistors. When the circuit is switched on, the capacitor is uncharged, and the base-emitter voltage of the transistor is zero to enable the silicon controlled rectifier to be conductive. Once the battery has been fully charged, it increases in temperature, and the thermostat opens, thereby resulting in an increased voltage across the gate control circuit. This increase in voltage causes the capacitor to charge, and the transistor to become conductive. This therefore allows the gate of the silicon controlled rectifier to be latched in a high state thereby preventing the silicon controlled rectifier from conducting.

The present invention is a battery charging circuit comprising a thermal cut-out switch in series with the main terminals of a gate controlled silicon conducting switch element.

### BRIEF DESCRIPTION OF THE DRAWINGS

Fig. 1 is an embodiment of automatic charging cut-off circuit comprising a temporary stick circuit and temperature control switch for chargeable battery.

Fig. 2 is an embodiment of circuit of Fig. 1 being equipped with feed back diode.

### DETAILED DESCRIPTION OF THE INVENTION

Generally speaking all of conventional automatic charging cut-off circuit comprising voltage or current detection device being consisted in electronic component assemblies for charging the battery with temperature control switch in order to switch the charger into stick charging at some rated 0.1.C of battery (10% current of rated AH) when battery is saturated with charging or gets rather hot. A battery charging circuit comprising a thermal cut-out switch in series with the main terminals of a gate-controlled semiconductor switching element, the thermal cut-out switch having normally closed contacts which are arranged to open and thereby cut-off the main charging current when the temperature of the battery exceeds a predetermined temperature, the gate of the semiconductor switching element being coupled to a capacitor whereby the semiconductor switching element is latched OFF by the capacitor following the opening of the thermal cut-out switch to interrupt the main charging current irrespective of the state of the thermal cut-out switch until the battery B1 is disconnected characterised in that the capacitor C1 switches the semiconductor switching element SCR1 on when the capacitor C1 is charged following the commencement of battery charging to enable the main charging current to flow while the thermal cut-out switch is closed, in that the capacitor C1 latches the semiconductor switching element SCR1 off following the opening of the thermal cut-out switch TS1 only when the capacitor C1 is charged and in that the semiconductor switching element SCR1 is latched off until the capacitor C1 is discharged.

However, conventional circuits are involved in complex parts so that the production cannot be accomplished at reasonable cost. The present invention is characterised by using temporary stick circuit and the action of temperature control switch for chargeable battery as reference conditions to provide a low-cost automatic charging cut-off circuit, and further with feed back diode to provide a circuit having the function of emergency automatic power supply.

The circuit using temporary stick circuit and temperature control switch for chargeable battery as operational conditions comprises a number of elements.

A power supply which is DC, semi-wave DC, full-wave DC, intermittent pulse DC or weeping-wave DC.

A chargeable battery which can incorporate a normally closed temperature control switch.

A temporary stick circuit is controlled by temperature control switch, which when the temperature of chargeable battery rises over the rated temperature of the temperature control switch is opened, and the circuit may stick to topping-up charging of the battery with minor current by means of by-pass branch circuit limitation until power supply is turned OFF or battery is removed and the current is interrupted.

The present invention is hereby described accompanying the drawings as below:

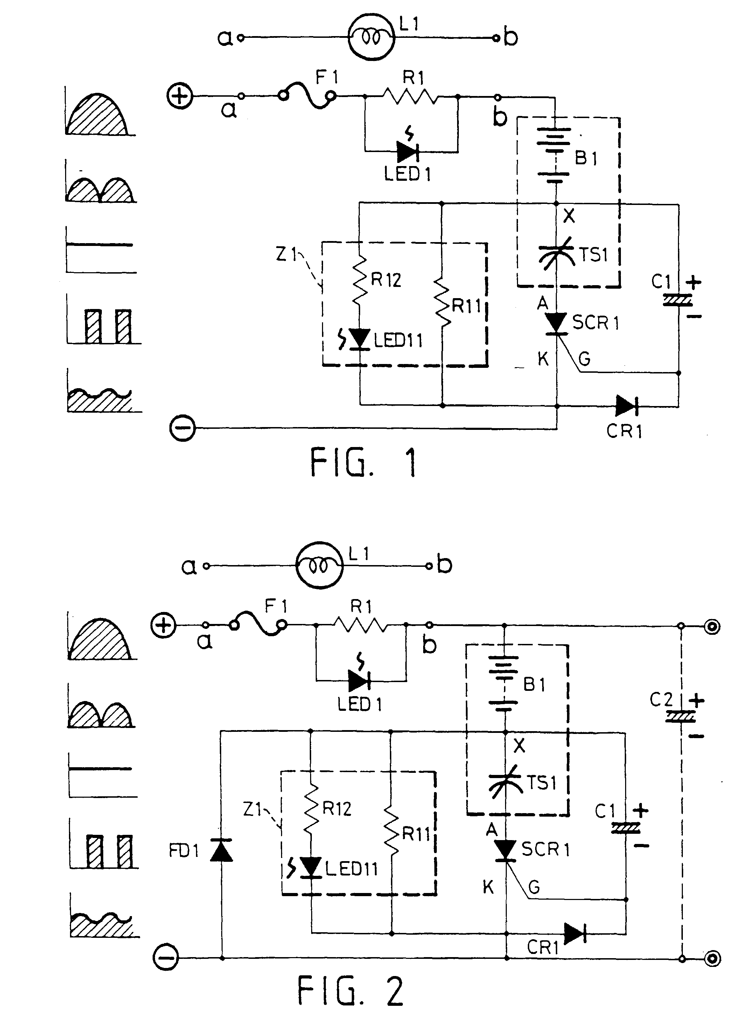

Referring to FIG. 1 the embodiment of automatic charging cut-off circuit using temporary stick circuit and temperature control switch for chargeable battery is as follows.

A chargeable battery B1 and a normally closed temperature control switch TS1 being series connected to each other.

They are connected in series to a thyristor SCR1.

The circuit further includes a limiting resistance R1 being parallel connected to an LED1 for charging display and then series connected short-circuit protective element (fuse) F1, and finally series connected chargeable battery B1, normally closed switch TS1 and thyristor SCR1 leading to DC power supply of charging. The limiting resistance R1, LED1 for charging display and protective element F1 may be substituted by a filament type lamp L1;

A trigger capacitance C1, has one end which is connected to a common connection x between the chargeable battery B1 and the normally closed temperature control switch TS1, and another end which is connected to trigger gate G of thyristor SCR1.

A by-pass branch element Z1 comprising a limiting resistance R12 being series connected with branch LED11 for display which are, together connected in parallel across a branch resistance R11. The value of impedance is able to close thyristor SCR1 and retain the value of current at topping-up charge for the battery.

A discharge diode CR1 is parallel connected at the section between the negative terminal K of thyristor SCR1 and gate G. The diode is oriented so as to be able to let discharge current during capacitor discharging to be delivered through the discharge diode CR1, i.e. to enable capacitance C1 be delivered through by-pass branch element Z1 and the diode CR1 to form a discharge circuit.

The operative sequences of the circuit of FIG. 1 as below.

At time of starting to charge the battery, the capacitor C1 is discharged, and due to instantaneous charging effect of capacitance C1, the thyristor SCR1 is triggered to be conductive so as to charge battery B1; When battery B1 is almost saturated the temperature rises and the normally closed temperature control switch TS1 is cut-off or opened and the thyristor SCR1 is thus cut-off accordingly. At this moment, charging current is limited to that passing through the by-pass branch element Z1 to enable the battery to be topped-up with charge of minor current. The value of the voltage of trigger capacitance C1 is identical to the end voltage of by-pass branch element Z1.

When thermo switch returns to the original position the potential of capacitance remains the same or charged so that the thyristor SCR1 remains cut-off. When the battery B1 is removed, the trigger capacitance C1 will discharge through by-pass branch element Z1 and discharge diode CR1 to enable the circuit to be in a standby state.

As shown in Figure 2, said circuit is further characterised to be equipped with feed back diode FD1 to enable the battery to offer power supply for charging load at negative/positive output end of the original DC power supply through feed back diode when power supply is interrupted.

Thus, the circuit is initially energised, capacitor C1 is charged and the resulting current flow between the gate of thyristor SCR1 and the negative pole of capacitor C1 switches on thyristor SCR1. This enables the battery B1 to be charged via the normally closed contacts of temperature-sensitive switch TS1. When the battery is almost fully charged and its temperature rises past a predetermined value, the contacts of switch TS1 open and a substantially reduced charging current flows through branch Z1, which is sufficient to maintain the charge of the battery B1. In this condition, thyristor SCR1 is turned OFF. When the battery temperature falls as a result of the main charging current being cut-off by switch TS1, the contacts of switch TS1 close but no charging current flows in capacitor C1, which remains charged. Consequently no current flows from gate G of thyristor SCR1 and the thyristor remains latched OFF. However on removing battery B1 from he circuit the capacitor C1 can discharge through diode CR1, restoring the circuit to its original state so that another battery can be connected for charging as described above.

In FIG. 2 the circuit of FIG. 1 is equipped with feed back diode FD1 further to have the function of emergency automatic power supply, comprising:
feed back diode FD1 being reversely parallel connected to the negative end of DC power supply battery B1 and common connection x between the negative end of battery B1 and constant-closed temperature control switch TS1:
the load being parallel connected to the positive end of battery and negative end of power supply; in general the circuit is driven by the load and if current is interrupted a loop is formed by feed back diode FD1 instead;
steady capacitance C2 being parallel connected the load to stabilize the course of switching and provided to select delivery value or omitted subject to the requirement.

To conclude above-said statement, the present invention relates to an automatic charging cut-off circuit using temporary stick circuit and temperature control switch for charging a battery so as to automatically switch into topping-up charging with minor current when the battery is saturated, and further with feed back diode to form an emergency automatic power supply circuit.

The invention includes the following preferred features:

An automatic charging cut-off circuit using temporary stick circuit and the operative states of temperature control switch for chargeable battery as reference conditions and further being characterised with feed back diode to form an emergency automatic power supply circuit, as follows:

The chargeable battery B1 and a normally closed temperature control switch TS1 on chargeable battery B1 being series connected to each other and then series connected to a thyristor SCR1;

The circuit includes a limiting resistance R1 being parallel connected with an LED1 for charging display and then series connected short-circuit protective element F1, and finally series connected with the chargeable battery B1, constant-closed switch TS1 and thyristor SCR1 leading to DC power supply of charging. The limiting resistance R1, LED1 for charging display and protective element F1 may be substituted by a filament type lamp L1;

A trigger capacitance C1, one end of which is connected to a common connection x between a terminal of the chargeable battery B1 and the normally-closed temperature control switch TS1, and the other end of which is connected to trigger gate G of thyristor SCR1.

A by-pass branch element Z1 comprises limiting resistance R12 series connected to an LED11 for display, which together are connected in parallel with a branch resistor R11. The value of impedance is able to close thyristor SCR1 and retain the value of current at topping-up charge for the battery.

A discharge diode CR1 is parallel connected between the negative terminal K of thyristor SCR1 and the Gate G. The diode CR1 is oriented so as to be able to let discharged current during capacitor discharging be delivered through the discharge diode CR1, i.e. to enable capacitance C1 be delivered through by-pass branch element Z1 and the diode CR1 to construct a discharge circuit.

The operative sequences of the circuit of FIG. 2 is as follows.

At time of commencing charging, due to instantaneous charging of capacitance C1 the thyristor SCR1 is triggered and is conductive so as to charge battery B1. When battery B1 is almost saturated, its temperature rises and the normally closed temperature control switch TS1 is cut-off or opened and the thyristor SCR1 is thus cut-off accordingly. At this moment charging current is limited by by-pass branch element Z1 to enable the battery to receive a topping-up charge with minor current, and the value of voltage of trigger capacitance C1 is identical to the end voltage of by-pass branch element Z1.

When thermo switch returns to the original position the potential of capacitance remains the same so that the thyristor SCR1 maintains open and non-conductive. When the battery B1 is removed the trigger capacitance C1 will discharge through by-pass branch element Z1 and discharge diode CR1 to enable the circuit to return to trigger standby.

The automatic charging cut-off according to claim 1 is further characterised by a feed back diode FD1 to enable the battery to offer power supply for changing load at negative/positive output end of the original DC power supply through feed back diode when power supply is interrupted, which also has the function of emergency automatic power supply.

A feed back diode FD1 is reversely parallel connected to the negative end of DC power supply battery B1 and common connection x between the negative end of battery B1 and normally-closed temperature control switch TS1.

The load is connected to the positive end of battery and negative end of power supply. In general the circuit is driven by the load and if current is interrupted a loop is formed by feed back diode FD1 instead.

The steady capacitance C2 is parallel connected with the load to stabilize the course of switching and provided to select delivery value or omitted subject to the requirement.

## Claims

1. A battery charging circuit comprising a thermal cut-out switch (TS1) in series with the main terminals of a gate-controlled semiconductor switching element (SCR1) such that one contact of the thermal cut-out swithch (TS1) is connected to the anode of the semiconductor switching element (SCR1), the thermal cut-out switch (TS1) having normally closed contacts which are arranged to open and thereby cut off the main charging current when the temperature of the battery (B1) exceeds a predetermined temperature, and a capacitor (C1) controlling the gate (G) of the semiconductor switching element (SCR1) whereby the main charging current flowing through the semiconductor switching element (SCR1) is switched off after the opening of the thermal cut-out switch (TS1), and the charged capacitor (C1) controls the gate (G) so as to maintain the semiconductor switching element (SCR1) latched OFF to interrupt the main charging current when the temperature of the thermal cut-out switch (TS1) is lowered and the thermal cut-out switch (TS1) becomes closed the semiconductor switching element remaining latched OFF irrespective of the state of the thermal cut-out switch (TS1) until the battery (B1) is disconnected and the capacitor (C1) is discharged,
characterised in that one terminal of the capacitor (C1) is connected to the gate (G) of the semiconductor switching element (SCR1) and the other terminal of the capacitor (C1) is connected to the side of the thermal cut-out switch furthest from the semiconductor switching element such that the capacitor (C1) becomes charged to energize the semiconductor switching element (SCR1) and enable the main charging current to flow through the thermal cut-out switch (TS1) when the battery (B1) having the closed thermal cut-out switch (TS1) is connected to the circuit.

2. A battery charging circuit according to claim 1, characterised in that a circuit branch (Zl) bypasses said thermal cut-out switch (TS1) and said semiconductor switching element (SCR1) and provides a reduced charging current sufficient to hold the charge of the battery (Bl) when the main charging current is interrupted.

## Patentansprüche

1. Eine Schaltung zum Aufladen einer Batterie bzw. eines Akumulators, umfassend einen thermischen Ausschalter (öffner) (TS1) in Serie mit den Hauptanschlüssen eines Tor-gesteuerten Halbleiterschaltelementes (SCR1), derart dass ein Kontakt des Ausschalters (TS1) mit der Anode des Halbleiterschaltelementes (SCR1) verbunden ist, die Kontakte des thermischen Ausschalters (TS1) sind im Ruhezustand geschlossen und angeordnet zum öffnen und damit Ausschalten des Hauptladestromes, wenn die Temperatur der Batterie (Bl) eine vorbestimmte Temperatur überschreitet; und ein Kondensator (Cl) steuert das Tor (G) des Halberleiterschaltelementes (CSR1), wodurch der Hauptladestrom durch das Halbleiterschaltelement (SCRl) abgeschaltet ist nach öffnen des thermischen Ausschalters (TS1), und der geladene Kondensator (Cl) steuert das Tor (G) so, dass das Halbleiterschaltelement (SCR1) ausgerastet/ausgeschaltet bleibt, um den Hauptladestrom zu unterbrechen, wenn die Temperatur des thermischen Ausschalters (TS1) abgesenkt wird und der thermische Ausschalter (TS1) geschlossen wird, das Halbleiterschaltelement bleibt ausgeschaltet, unabhängig von dem Zustand des thermischen Ausschalters (TS1), bis die Batterie (Bl) abgenommen wird und der Kondensator (Cl) entladen wird,
dadurch gekennzeichnet, dass ein Anschluss des Kondensators (Cl) mit dem Tor (G) des Halbleiterschaltelementes (SCR1) verbunden ist und der andere Anschluss des Kondensators (Cl) ist mit der Stelle des thermischen Ausschalters (TS1) verbunden, die am weitesten von dem Halbleiterschaltelement (CSR1) entfernt liegt, derart dass der Kondensator aufgeladen wird zur Erregung des Halbleiterschaltelementes (SCR1), so dass der Hauptladestrom durch den thermischen Ausschalter (TS1) fliessen kann, wenn die Batterie an den geschlossenen Ausschalter (TSl> angeschlossen ist.

2. Eine Batterieladeschaltung nach Anspruch 1, dadurch gekennzeichnet, dass ein Zweig (Zl) der Schaltung den thermischen Ausschalter (TS1) und das Halbleiterschaltelement (SCR1) überbrückt und einen reduzierten Ladestrom liefert, der ausreichend ist, um die Ladung der Batterie (Bl) zu halten, wenn der Aufladestrom unterbrochen ist.

## Revendications

1. Circuit de charge de batterie comprenant un interrupteur thermique de coupure (TS1) en série avec les bornes principales d'un élément de commutation à semi-conducteur, à grille de commande (SCR1), de manière qu'un contact de l'interrupteur thermique de coupure (TS1) soit connecté à l'anode de l'élément de commutation à semi-conducteur (SCR1), l'interrupteur thermique de coupure (TS1) ayant des contacts normalement fermés qui sont agencés pour s'ouvrir et donc couper le courant principal de charge quand la température de la batterie (B1) dépasse une température prédéterminée, et un condensateur (C1) commandant la grille (G) de l'élément de commutation à semi-conducteur (SCR1), grâce à quoi le courant principal de charge traversant l'élément de commutation à semi-conducteur (SCR1) est coupé après l'ouverture de l'interrupteur thermique de coupure (TS1), et le condensateur (C1) chargé commande la grille (G) de manière à maintenir l'élément de commutation à semi-conducteur (SGR1) verrouillé au blocage quand la température de l'interrupteur thermique de coupure (TS1) est abaissée et que l'interrupteur thermique de coupure (TS1) se ferme, l'élément de commutation à semi-conducteur restant verrouillé au blocage quel que soit l'état de l'interrupteur thermique de coupure (TS1) jusqu'à ce que la batterie (B1) soit déconnectée et que le condensateur (C1) soit déchargé, caractérisé en ce qu'une borne du condensateur (Ci) est connectée à la grille (G) de l'élément de commutation à semi-conducteur (SCR1), et l'autre borne du condensateur (Ci) est connectée au côté de l'interrupteur thermique de coupure le plus éloigné de l'élément de commutation à semi-conducteur de manière que le condensateur (C1) se charge pour exciter l'élément de commutation à semi-conducteur (SCR1) et permette au courant principal de charge de traverser l'interrupteur thermique de coupure (TS1) quand la batterie (B1), dont le commutateur thermique de coupure (TS1) est fermé, est connectée au circuit.

2. Circuit de charge d'une batterie selon la revendication 1, caractérisé en ce qu'un circuit en dérivation (Zl) contourne l'interrupteur thermique de coupure (TS1) ainsi que ledit élément de commutation à semi-conducteur (SCR1) et applique un courant de charge réduit suffisant pour maintenir la charge de la batterie (B1) quand le courant principal de charge est interrompu.
